Europäisches Patentamt

European Patent Office

Office européen des brevets

(11) Publication number: 0 262 770
A1

## (12) EUROPEAN PATENT APPLICATION

(21) Application number: 87306863.9

(22) Date of filing: 03.08.87

(51) Int. Cl.⁴: G02B 6/38 , B24B 7/16

(30) Priority: 11.08.86 US 895547

(43) Date of publication of application:
06.04.88 Bulletin 88/14

(84) Designated Contracting States:
DE FR GB IT SE

(71) Applicant: AMPHENOL CORPORATION
358 Hall Avenue P.O.Box 384
Wallingford Connecticut 06492(US)

(72) Inventor: Margolin, Mark
6611 Lawndale
Lincolnwood Illinois 60645(US)
Inventor: Essert, Robert Dale
579 Riford Road
Glen Ellyn Illinois 60137(US)
Inventor: Grois, Igor
7136 Keystone
Lincolnwood Illinois 60646(US)
Inventor: Moore, James Elton
2016 Chatham
Wheaton Illinois 60187(US)

(74) Representative: Abnett, Richard Charles
REDDIE & GROSE 16 Theobalds Road
London WC1X 8PL(GB)

(54) Method for terminating a fiber optic cable with a fiber optic connector, tool for terminating and a kit therefor.

(57) A tool, a kit and a method are used for terminating a fiber optic cable with a fiber optic connector. The tool (I) provides a spring loaded arrangement whereby a cable terminated with a connector (27) is mounted within the tool and a spring force biases the end of the connector carrying a ferrule (29) downwardly out of the tool with the fiber mounted within and extending therefrom. When polishing is to be conducted, the spring force is such that the tool recedes within the housing (3) with only the fiber end extending from the connector extending therefrom such that no polishing will occur on the end face (3I) of the ferrule and thus no removal of ferrule material occurs.

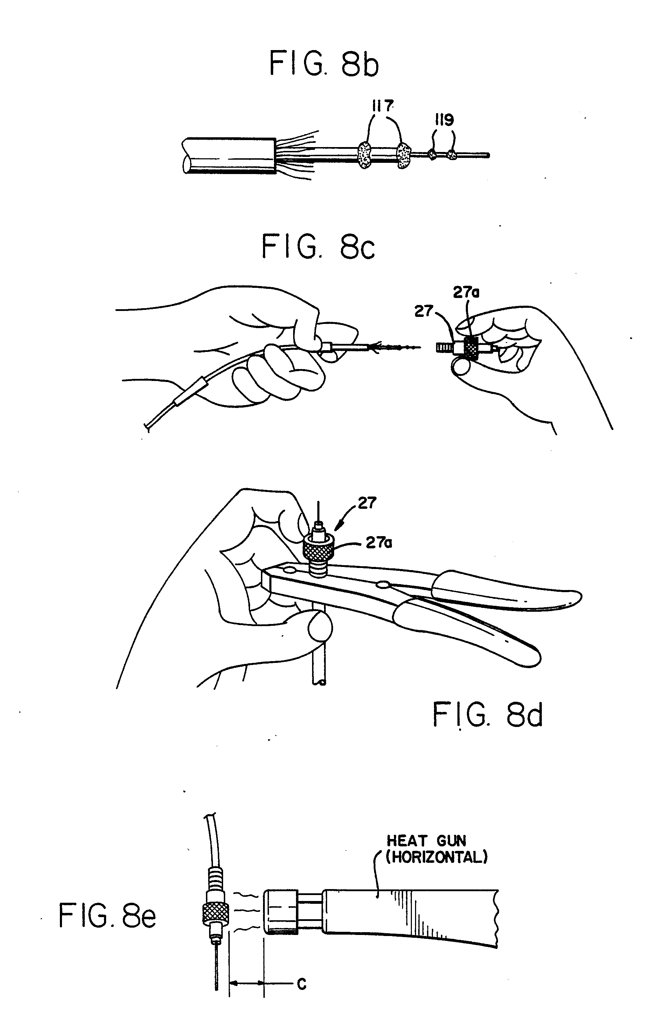

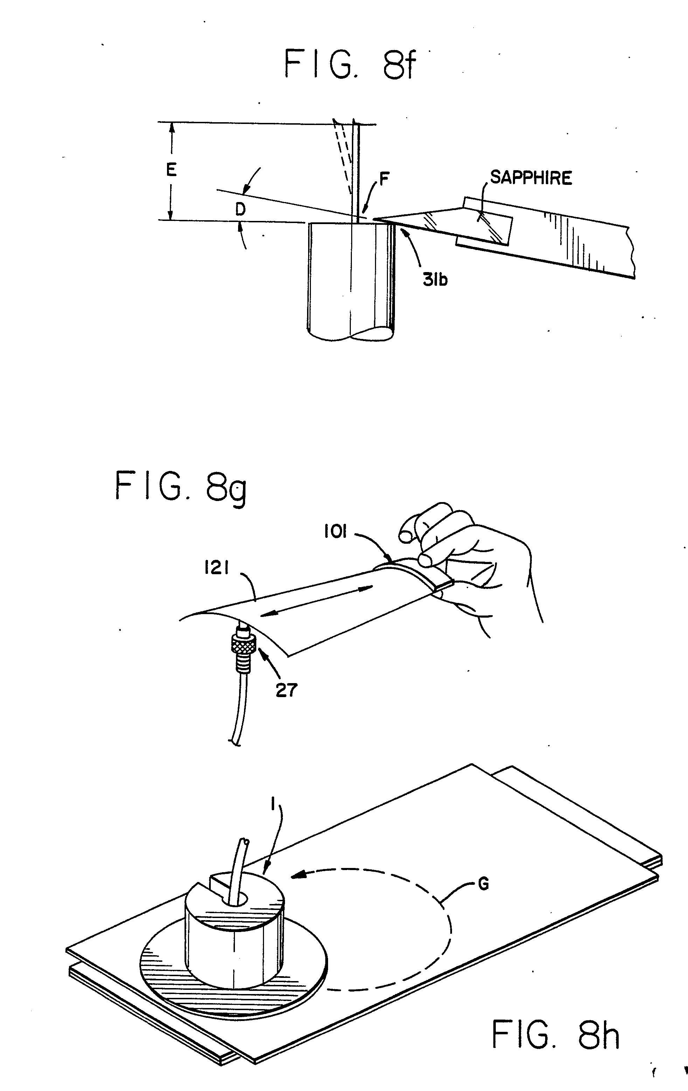

The kit includes a first rough polishing tool (IOI) which will result in bevelled edges of the ferrule such that when the tool is employed with such bevelled edges, there is no danger of damaging the polishing surface with the edges of the ferrule as it extends beyond the tool. The method comprises the steps of doing a first rough polishing (Fig. 8g) and then the fine polishing (Fig. 8h) with the tool employing the devices discussed.

FIG. I

FIG. 8g

121

101

27

I

G

FIG. 8h

Ia.

# METHOD FOR TERMINATING A FIBER OPTIC CABLE WITH A FIBER OPTIC CONNECTOR, TOOL FOR TERMINATING AND A KIT THEREFOR

## BACKGROUND OF THE INVENTION

This invention relates to a method for terminating a fiber optic cable with a fiber optic connector whereby the end of a fiber projecting beyond the mating ferrule of a fiber optic connector can be polished without polishing of the end face of the ferrule itself. The invention also relates to a tool for conducting the polishing of the fiber, the polishing being a final fine polishing of the fiber without grinding down the end of the ferrule within which the fiber is received and without allowing any polishing or grinding down of the polishing tool itself. The invention also relates to a kit for polishing the fiber end of a fiber optic cable terminated within a fiber optic connector.

The field of this invention relates to the use of such a polishing technique, tool and kit in conjunction with connectors known generally as SMA type connectors. Such SMA type connectors are generally comprised of a main metal body to which is attached a ceramic ferrule at the end of which is terminated and polished the fiber. For example, such SMA ceramic type connectors are commercially available from Ofti as well as from Allied Amphenol Products. This invention is especially adapted for use with the SMA-type connector disclosed in copending European Patent Application No. 87306713.6 based on U.S. Application No. 892,976 filed August 4, 1986. The present invention is especially adapted for use with such a connector because it is essential in terminating a fiber optic cable within such a connector that upon polishing of the end of the ceramic ferrule thereof, that no material is removed from the end of the ceramic ferrule and only the fiber end is polished to a level wherein the fiber projects, for example, an amount typically about two microns beyond the end of the ceramic ferrule. Moreover, by not polishing the end of the ferrule and only polishing the fiber, in this type of connector, criticality of length is maintained such that the ferrule is maintained, on a repetitive basis, projecting from the end of the metal body of the connector in a range of 0.3860-0.3863 inches, (9.804 - 9.812mm). This precision maintaining technique thus results in typical dB losses with such connectors of 0.2 dB or less as compared to the prior art losses in such connectors of 0.5 dB and typically greater than 1 dB losses.

## SUMMARY OF THE INVENTION

Accordingly, in accordance with the invention in one aspect, there is provided an improvement in a method of terminating a fiber optic cable with a fiber optic connector. The cable is of the type having a light transmitting fiber, and the method comprises attaching the cable to the connector, at least in part by epoxying the fiber within an axially extending passage of a mating ferrule of the connector in a manner wherein the fiber end extends beyond the mating end of the ferrule, and thereafter grinding polishing down the end of the fiber in amount such that the fiber is flushed with the mating end of the ferrule. This polishing is typically conducted in a manner such as to be sufficient to result in a polished end face of the fiber for transmitting light. The improvement in accordance with this aspect of the invention resides in that the fiber extending beyond the ferrule is cut to a length defining a stub extending adjacent the end of the ferrule. A first step of rough polishing of the end of the fiber is conducted with a curved polishing surface in a manner such that the edges at the end of the ferrule become bevelled. Thereafter, a fine polishing of the fiber is conducted by placing a spring loaded tension on the connector while polishing is being conducted. The tension is sufficient to only polish down the fiber but insufficient to remove additional material from the end of the ferrule.

In another aspect, the invention resides in the provision of a tool for conducting the fine polishing. The tool comprises a polishing disc having a passage therethrough shaped for holding a terminated fiber optic connector therein with the mating ferrule end projecting therefrom. Spring biasing means is arranged for exerting a predetermined force on a connector mounted in the polishing disc such that when polishing is conducted on a polishing surface, the connector end will recede against the spring force such that no polishing of the end of the ferrule or of the disc itself will occur. Accordingly, only the end of the fiber is polished or polishable with this tool. A main housing serves to interengage the polishing disc and spring biasing means to each other and to retain a connector mounted in the polishing disc therein.

In yet still another aspect of the present invention there is provided a kit for polishing the fiber end of a fiber optic cable terminated with a fiber optic connector with the fiber extending from the mating ferrule thereof. The kit comprises first polishing means constructed for exerting a first limited force on the fiber. Further, fine polishing means is provided, which fine polishing means is constructed such that a limited force is exerted on a connector whereby only the fiber is polished and no polishing of the mating ferrule occurs. In a still more specific aspect, the kit provides that the fine polishing means comprises, in part, the tool discussed above.

## BRIEF DESCRIPTION OF THE DRAWINGS

Having briefly described the invention, the same will become better understood from the following detailed discussion made with reference to the accompanying drawings wherein:

Figure 1 is a side cross-sectional view of the tool in accordance with the invention shown in assembled condition with a connector, absent cable, therein for purposes of illustrating the tool's operation;

Figure 2 is a top schematic partial cross-sectional view of the main body member which holds the polishing disc and biasing means of the invention together;

Figure 3 is a view as in Figure 2 of the biasing member of the tool in accordance with the invention;

Figure 4 is an end view of the first rough polishing member of the kit in accordance with the invention, showing a curvature thereof, which permits the rough polishing of the fiber end without damaging the ends of the connector while at the same time bevelling the edge of the ferrule thereof;

Figure 5 is a top view of the piece illustrated in Figure 4;

Figure 6 is a side view of the end of a ceramic ferrule after having been preliminarily rough polished with the device of Figures 4 and 5;

Figure 7 is a side cross-sectional view of a typical connector of the type with which the present invention is employed; and

Figures 8a-8h show the various steps employed in terminating a cable in accordance with the present invention.

## DETAILED DISCUSSION OF THE INVENTION

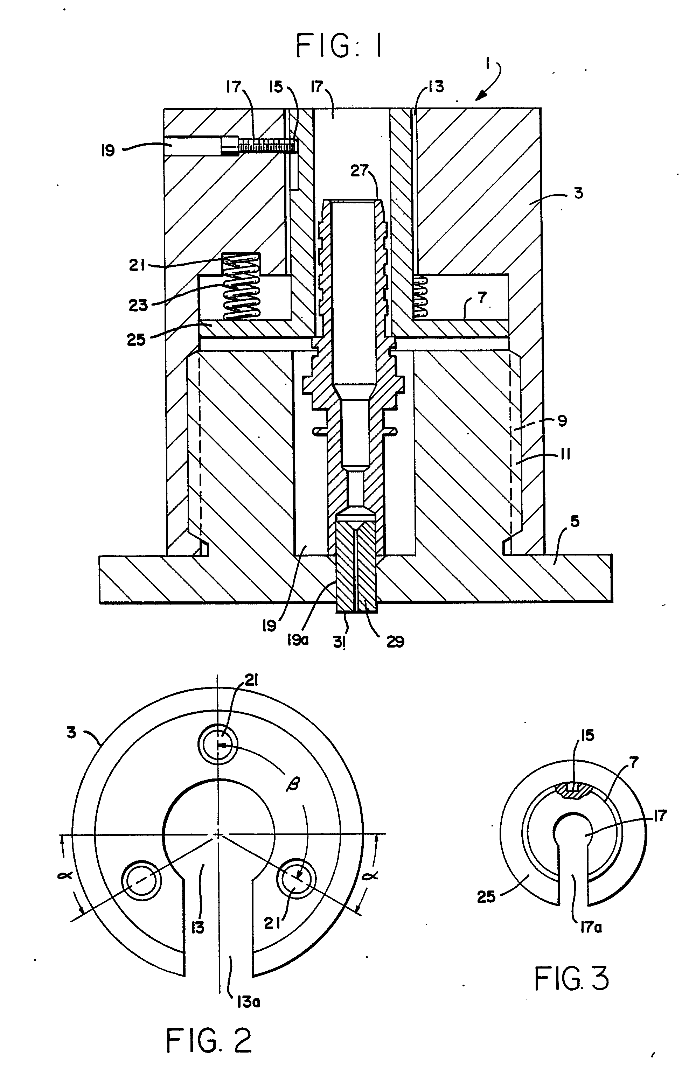

In Figures 1-3 there is shown a tool 1 for use in performing fine polishing of a terminated fiber of a fiber optic cable once terminated with a connector 27. In Figure 1, the connector 27 is shown standing alone without a fiber optic cable attached thereto for the sake of simplicity of illustration. As shown therein, once a fiber optic cable is terminated, the fiber would be mounted within a ceramic ferrule 29 having an end face 31. The connector would be mounted within a polishing disc member 5 within a recess 19 thereof having a smaller section 19a for receiving the ceramic ferrule 29 in tight tolerance sliding engagement. The polishing disc 5 includes a raised portion having threads 11 for being threaded to like threads 9 of main body member 3, which serves to hold the entire assembly together. A main body member 3, cylindrical in shape, includes a passageway 13 which is coextensive with the passageway 19 and serves to permit a biasing member 7 to be received in interengagement between the main body member 3 and the polishing disc 5. This biasing member 7 includes a projecting outward disc like structure 25 which abuts against a portion of the connector 27, shown abutting against the connector 27 in the figure, but typically in the case of an assembled connector and cable, against a conventional coupling nut which would be assembled on the connector.

As seen in Figure 1, the biasing member 7 is urged downwards by springs 23 which are received in corresponding housings 21 of the main body member 3. The downward movement of the biasing member 7 is limited by a slot 15 cut into the body thereof which serves to engage the biasing member 7 to the main body member 3 by means of a screw or pin 17 as received within a tranversely extending passage 19 of the main body member 3. This arrangement is more clearly shown in Figures 2 and 3.

Figure 2 shows the main body member 3 in partial cross-section showing an arrangement of spring receiving housings 21 disposed equally about the main body member 3. The spring housings 21 are arranged such that the angle $\alpha$ between each housing and the perpendicularly extending lines is equal to about 30 degrees with one of the housings 21 actually received on the perpendicular line axis as shown in Figure 2. Accordingly, it can be seen at the angle $\beta$ between each of the housings will be about 120 degrees resulting in substantially uniformity of pressure exerted downward on the biasing member 7. As also shown in Figure 2, the passage 13 includes a cutout 13a which is clearly shown in Figure 8h shows to permit the connector to be mounted within the tool 1 when in terminated condition with a cable extending therefrom.

The biasing member 7 likewise, as shown in Figure 3, illustrates in partial cross-sectional view the slot 15 which serves to retain it within the tool 1 and prevent rotation thereof. This member 7 also includes a passageway 17 with a cutout 17a which is coextensive with the cutout 13a to permit the cable to extend therefrom as clearly shown in Figure 1. The springs 21 are selected such that the force exerted by the springs 21 is such that when pressure is exerted on the housing 1 to polish the end of a fiber mounted within the connector 27, with the ferrule end 31 projecting slightly downward from the polishing disc, the biasing member 7 will recede against the force of the springs 21 to a point where only the fiber is polished and there is no polishing by a polishing surface of the disc 5 or the end face of 31 of the ceramic ferrule 29. Accordingly, very precise tolerances can be maintained, as in the case with the above referenced connector described in the copending application such that critical dimensions, in the case of these connectors as well known to those of ordinary skill in the art can typically be manufactured on the order 0.3860 to 0.3863 inches (9.804 to 9.812mm) in ferrule length. This results in very low, i.e., typically less then 0.2 dB, losses in transmission when employed with a like connector. More particularly, as has been discovered when employing such a tool, the fiber will in effect not be flush with the end face of the ceramic member and will project slightly, for example, on the order of about two microns, resulting in direct physical abutment of fiber to fiber when the connector is employed. This is in contrast with present conventional standards, for example as taught in various Ofti publications which disclose creation of a gap between fiber ends as desireable. Instead, it has been discovered that direct fiber to fiber abutment is highly desireable and results in an unexpected reduction in transmission losses.

In accordance with the method and kit of the invention, in the kit there is provided an additional tool which comprises a generally circumferentially extending piece of metal 101, typically aluminum, which piece of metal 101 when in use with these connectors will have a radius of curvature of approximately 1.5 inches (3.75mm). The piece of metal 101 will be about 1 inch (2.5mm) in width and the length being only sufficient to provide the desired function as will become readily apparent to those of ordinary skill in the art.

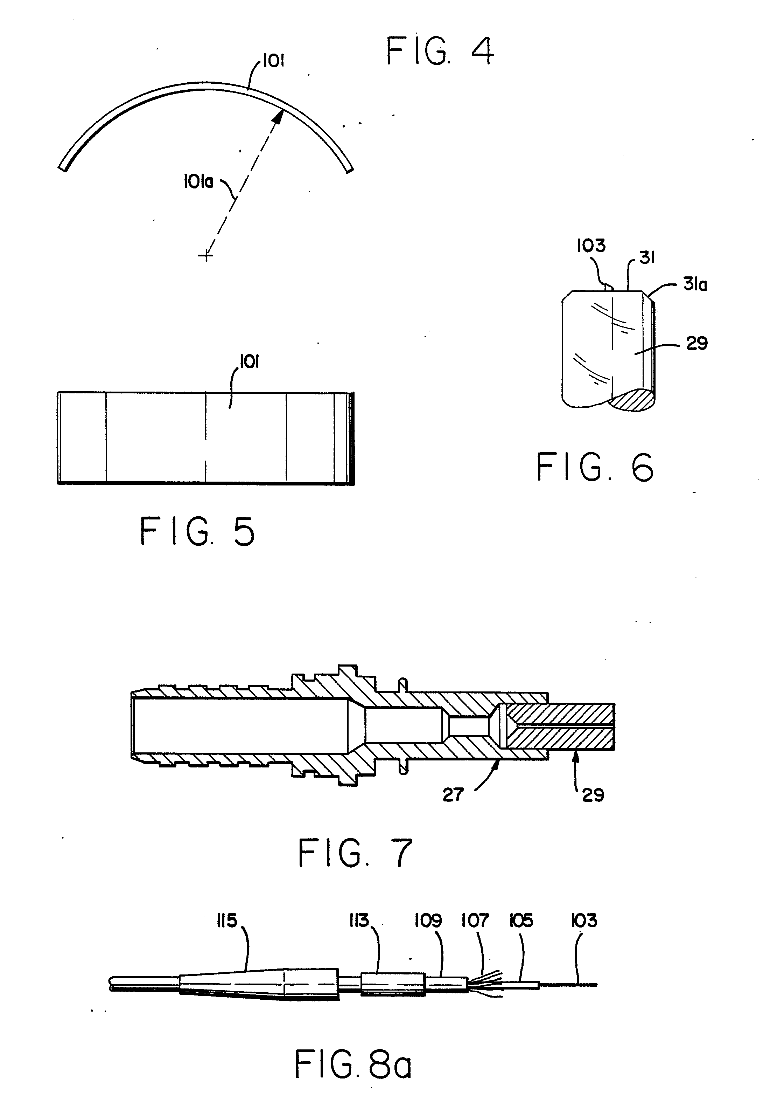

A conventional strip of rough polishing material 121 is adhered thereto as shown in Figure 8g and moved in the direction of the arrow in said figure to effect an initial rough polishing of the end of the ceramic ferrule 29 when a cable is preliminarily terminated with the connector. As shown in Figure 6, this will result in bevelled edges 31a of the end face 31 of the ceramic ferrule 29, and with a stub 103 of fiber remaining. This is desirable for use with the tool 1 of Figure 1 since in beginning polishing on the fine polishing surface, the bevelled edges serve to prevent damage to the polishing surface and facilitates initial polishing of the stub 103 down to its desired length. Accordingly, the kit in accordance with the invention will include the two tools as shown in Figures 8g and 8h.

In accordance with the practice of the method of the invention, a standard connector as shown in Figure 7 is employed to terminate a fiber optic cable. Figure 8h shows the preliminary preparation of the cable which, as in the case with most connectors today, will be epoxied into the connector but the epoxying technique being slightly different and improved over conventional techniques. Initially a boot 115 is slipped over the connector along with a crimp sleeve 113 which will serves to crimp the cable 109 at the strength members 107 thereof to the connector 27. The outer sheath 111 of the cable 109 protects the entire assembly of cable components as it projects rearwardly from the boot 115. Accordingly, as shown in Figure 8a, predetermined lengths of the different segments of the cable 109 are cut off such that in a stepped arrangement one can see sections of strength members 107, buffer covered fiber 105 and bare fiber 103.

As shown in Figure 8b, intially two large drops of epoxy 117 are placed at the end of the buffer covered fiber and slightly rearwardly therefrom and in a like position, two small drops of epoxy 119 are placed on the bare fiber itself. Thereafter, the connector 27 with a coupling nut 27a assembled thereon is mounted onto the cable 109 in a conventional mounting step, and as shown in Figure 8d, a crimp tool is employed to crimp the cable to the connector 27. The connector is then, as shown in Figure 8e, held vertically pointing downward such as to optimize epoxy flow and a heat gun spaced a predetermined distance C, which is typically a half an inch (10-15mm), is employed to dry the epoxy.

Thereafter, as shown in Figure 8f, a sapphire blade is slid along the edges of the ceramic ferrule, which at this time is not bevelled, at an angle to scribe the fiber at point F thereof at an angle D such as to break off almost an entire length E extending from the end of the ferrule. The angle D is typically 1 to 2 degrees and thereafter, the sapphire blade is employed to push at the end of the fiber to cause the fiber to break off. This will permit the next step of rough polishing.

As shown in Figure 8g, typically a 15 micron lapping film is attached to the handle or member 101 and the film is moved in the direction of the arrow to result in a connector end face 31 as shown Figure 6 with initial rough polishing of the end of the fiber 103 which is in the face of a stub. Thereafter, the connector is mounted in the constant force polishing tool 1 and moved in a circular motion as shown by arrows G in Figure 8h. Typically, as well known to those of ordinary skill in the art, the lapping film is a one micron lapping film backed by a smooth hard surface and the number of motions will be approximately 40 circles at a diameter of approximately 2 inches (50mm). The result is a smoothly polished fiber end face with little or no abrasion or removal of ceramic material from the end of ferrule 29 as well as from the polishing disc 5.

The resultant fiber end face provides improved results in transmission over conventional termination techniques. Moreover, as a result of the constant force tool, the polishing disc, which typically in the past had been usable for no more than 40 polishings can now be employed for more than l0,000 terminations without replacement.

Having generally described the invention, it will readily be apparent to those of ordinary skill in the art that equivalent materials can be substituted without departing from the scope thereof as defined in the appended claims.

**Claims**

l. In a method of terminating a fiber optic cable with a fiber optic connector, the cable being of the type having a light transmitting fiber, and the method comprising attaching the cable to the connector, at least in part by epoxying the fiber within an axially extending passage of a mating ferrule of the connector in a mating ferrule of the connector in a manner wherein the fiber end extends beyond the mating end of the ferrule, and thereafter polishing down the end of the fiber an amount such that the fiber is flush with the mating end of the ferrule, the polishing conducted being sufficient to result in a polished end face of the fiber for transmitting light, the improvement wherein the fiber extending beyond the ferrule is cut to a length to define a stub extending adjacent the end of the ferrule; a first polishing of the end of the fiber stub is conducted with a curved polishing surface in a manner such that the edges at the end of the ferrule become bevelled; and thereafter, conducting a fine polishing of the fiber by placing a spring loaded tension on the connector received within a housing while polishing is being conducted, said tension being sufficient only to polish down the fiber but insufficient to force the connector out of the housing to result in removal of additional material from the end of the ferrule.

2. A tool for polishing the fiber end of a fiber optic cable terminated with a fiber optic connector, with the end of the fiber projecting beyond the mating end of the connector, the tool comprising: a polishing disc having a passage therethrough shaped for holding a terminated fiber optic connector therein with the mating ferrule end projecting therefrom;

spring biasing means arranged for exerting a predetermined force on a connector mounted in said polishing disc such that when polishing is conducted on a polishing surface, the connector end will recede against said spring force such that no polishing of the end of the ferrule or of the disc will occur with only the end of the fiber being polished; and

main housing means for interengaging said polishing disc and spring biasing means to each other and for retaining a connector mounted in said polishing disc therein.

3. A kit for polishing the fiber end of a fiber optic cable terminated with a fiber optic connector with the fiber extending from the mating ferrule thereof, comprising:

first rough polishing means constructed for exerting a first limited polishing of the fiber; and

fine polishing means constructed such that a limited force is exerted on a connector in which the fiber is mounted whereby only the fiber is polished and no polishing of the mating ferrule of the connector occurs.

4. A kit as in claim 3 wherein said fine polishing means comprises a tool for polishing the fiber end of a fiber optic cable terminated with a fiber optic connector, with the end of the fiber projecting beyond the mating end of the connector, the tool comprising:

a polishing disc having a passage therethrough shaped for holding a fiber optic connector terminating a cable therein with the mating ferrule end projecting therefrom;

spring biasing means arranged for exerting a predetermined force on a connector mounted in said polishing disc such that when polishisng is conducted on a polishing surface, the connector end will recede against said spring force such that no polishing of the end of the ferrule or of the disc will occur with only the end of the fiber in the connector being polished; and

main housing means for interengaging said polishing disc and spring biasing means to each other and for retaining a connector mounted in said polishing disc therein.

FIG: 1

FIG. 2

FIG. 3

FIG. 4

101

101a

103 31 31a 29

101

FIG. 5

FIG. 6

27 29

FIG. 7

115 113 109 107 105 103

FIG. 8a

## FIG. 8b

## FIG. 8c

## FIG. 8d

## FIG. 8e

HEAT GUN
(HORIZONTAL)

# FIG. 8f

E

D

F

SAPPHIRE

31b

# FIG. 8g

101

121

27

FIG. 8h

I

G

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-4 330 965 (CLARK) <br> * figure 1; column 3, line 64 - column 4, line 53 * <br> --- | 1,2 | G 02 B 6/38 <br> B 24 B 7/16 |
| A | US-A-4 272 926 (TAMULEVICH) <br> --- | 1 | |
| A | IBM TECHNICAL DISCLOSURE BULLETIN, vol. 26, no. 3B, August 1983, page 1648; E.C. UBERBACHER: "Fiber-optic connector" <br> ----- | 1 | |

TECHNICAL FIELDS SEARCHED (Int. Cl.4)

G 02 B 6/00
B 24 B 7/00
B 24 B 41/00

The present search report has been drawn up for all claims

| Place of search | Date of completion of the search | Examiner |
|---|---|---|
| BERLIN | 17-12-1987 | KEMSLEY E.E.K. |